# EUROPEAN PATENT SPECIFICATION

(11) **EP 3 845 071 B1**
(45) Date of publication and mention of the grant of the patent: **22.03.2023**
(21) Application number: 20206684.1
(22) Date of filing: 10.11.2020
(51) Int. Cl.: A23F 5/14, A23L 27/10

(54) **COFFEE ADDITIVE USING BLACK GARLIC EXTRACT AND PREPARATION METHOD THEREOF**
KAFFEEZUSATZ UNTER VERWENDUNG VON SCHWARZEM KNOBLAUCHEXTRAKT UND VERFAHREN ZU SEINER HERSTELLUNG
ADDITIF POUR CAFÉ UTILISANT DE L'EXTRAIT D'AIL NOIR ET SON PROCÉDÉ DE PRÉPARATION

(30) Priority: 30.12.2019 KR 20190177936; 31.08.2020 KR 20200110513
(43) Date of publication of application: 07.07.2021
(73) Proprietor: Haanong Foods. Co., Ltd, Gyeonggi-do 11150 (KR)
(72) Inventor: Lee, Jung Bin, 16808, Gyeonggi-do (KR)
(74) Representative: FARAGO Patentanwaltsgesellschaft mbH

(56) References cited:
- KR-A- 20110 030 028
- KR-A- 20130 071 708
- KR-A- 20130 078 144
- KR-A- 20160 149 790
- KR-B1- 101 616 955

## Description

### [Technical Field]

The present invention relates to a coffee additive containing a black garlic extract and a preparation method thereof, and more particularly, to a coffee additive composition containing reducing sugar, SAC, and the like of black garlic and a preparation method thereof.

### [Background Art]

Coffee is a representative favorite food of modern people, and in addition to effects of relieving fatigue and improving thinking ability through its own arousal effect, due to a unique flavor of coffee, preference population has increased rapidly throughout the world, and particularly, in Korea, the demand has exploded in the last 10 years.

However, excessive drinking of coffee has been reported to cause side effects such as excitement, insomnia, diuresis, loss of appetite, anxiety, tinnitus, palpitations, and diarrhea due to the activity of a caffeine ingredient contained in coffee.

For this reason, attempts have been studied to reduce the side effects of caffeine and to impart various functions to coffee.

In Korean Patent Publication No. 10-2013-00130149, there is disclosed instant coffee using acanthopanax koreanum and a preparation method thereof, in Korean Patent Publication No. 10-2006-0028229, there is disclosed instant coffee using acanthopanax senticosus and a preparation method thereof, and in Korean Patent Registration No. 10-1616955, there is disclosed instant coffee containing a green barley extract and a preparation method thereof.

According to the patent documents, it is an attempt to reduce side effects caused by excessive consumption of a caffeine ingredient while preserving the original flavor of coffee.

In addition, in Korean Patent Registration No. 10-134114, there is disclosed coffee jam as a novel food material and a preparation method thereof obtained by caramelizing sugar, adding milk, fresh cream, and oligosaccharide, adding water, stirring and heating the mixture, and then adding 4 to 16 parts by weight of granulated coffee and heating at 50°C to 70°C. In Korean Patent Registration No. 10-1890042, there is disclosed a red ginseng and coffee pill as a novel food material using 20 to 30 parts by weight of red ginseng powder and 15 to 20 parts by weight of coffee powder as main ingredients. In addition, in Korean Patent Publication No. 10-2018-0125233, there is disclosed a source for a braised spicy chicken prepared by adding other various food materials to 1 to 5 parts by weight of a black garlic extract and a preparation method thereof, wherein novel food materials that have not existed so far have been disclosed.

The former two kinds of novel food materials also relate to a food material composition containing granulated coffee or powdered coffee with respect to the entire composition, while the latter novel food material relates to a source composition containing a black garlic extract useful for eating a braised spicy chicken. However, until now, a coffee additive composition as a beverage containing the black garlic extract has not been disclosed or implied.

### [Prior Arts]

### [Patent Documents]

(Patent Document 1) Korean Patent Publication No. 10-2013-00130149,
(Patent Document 2) Korean Patent Publication No. 10-2006-0028229,
(Patent Document 3) Korean Patent Registration No. 10-1616955,
(Patent Document 4) Korean Patent Registration No. 10-134114,
(Patent Document 5) Korean Patent Registration No. 10-1890042, and
(Patent Document 6) Korean Patent Publication No. 10-2018-0125233

### [Disclosure]

### [Technical Problem]

Therefore, an object of the present invention is to provide a novel type of coffee additive which is added to coffee to be sweet and swallow softly and contains functional ingredients such as SAC and a preparation method thereof.

### [Technical Solution]

The object of the present invention is achieved by comprising (a) first preparing a caramel composition using a black garlic extract as a raw material; and (b) adding the caramel composition added with the black garlic extract obtained in step (a) to milk and heating and stirring the mixture, and evaluating palatability by performing a sensory test of the coffee additive prepared above. The step (a) may comprise the steps of (1) preheating a container; (2) further adding fresh cream and stirring and heating the mixture; (3) further adding white chocolate and stirring and heating the mixture; (4) further adding sugar and stirring and heating the mixture; (5) further adding condensed milk and heating the mixture; and (6) finally adding butter and a black garlic extract and stirring and heating the mixture, and further comprise performing powder drying for convenience of storage and usage.

### [Advantageous Effects]

The coffee additive prepared according to the present invention has an effect of providing a novel type of coffee additive composition which has never existed so far, and there is an excellent effect of providing a coffee additive which has a sweet taste as a sensory test result, is added with milk to swallow softly, and contains functional ingredients such as SAC.

### [Description of Drawings]

FIGS. 1A and 1B are diagrams illustrating a process of preparing a coffee additive separately according to the present invention,
FIG. 2 is a photograph of a final liquid coffee additive prepared according to the present invention, and
FIG. 3 is a photograph of a powdered coffee additive according to the present invention.

### [Modes of the Invention]

The present invention has been completed by first preparing a caramel using a black garlic extract, adding the caramel containing the black garlic extract obtained in the above step to milk and heating and stirring the mixture, and packaging and cooling a coffee additive prepared in the above step.

Hereinafter, a preparation method of a caramel containing a black garlic extract of the present invention and a preparation method of a coffee additive composition (hereinafter referred to as a 'coffee additive') prepared by adding the black garlic extract caramel prepared above to milk and then heating and stirring the mixture will be described in detail for each preparing step. However, the scope of the present invention is not limited thereto, and it goes without saying that substitution of equivalents to be added, addition of the equivalents or a simple change of an addition amount, and a temperature and a physical means by a production step are included within the scope of the present invention when the implementation thereof is very easy to those skilled in the art.

### [Example 1]

### Preparation of black garlic extract

According to an embodiment of the present invention, a black garlic extract may be prepared by a general method, or commercially available products K and N from a K company or an N company may be purchased and used. In addition, a black garlic caramel was prepared using a black garlic extract H prepared according to a method described in a prior patent application No. 10-2019-0177879 developed by the present inventors, and then a coffee additive of the present invention was prepared.

### [Example 2]

### Preparation of black garlic caramel

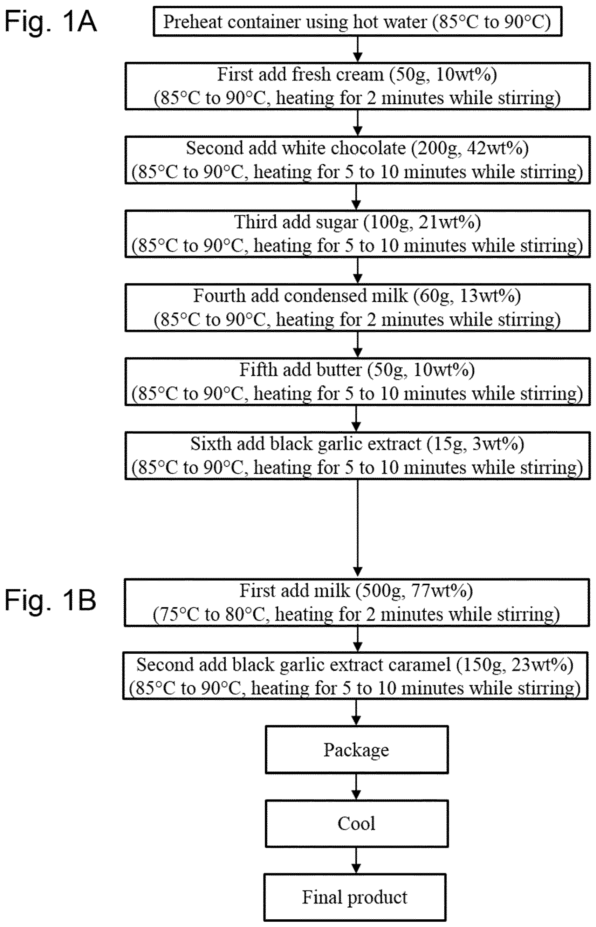

The coffee additive of the present invention was prepared (FIG. 1B) after a black garlic caramel was first prepared (FIG. 1A).

A coating pan was preheated to 80°C to 90°C, and then 50 g of fresh cream corresponding to 10 wt% of the total caramel composition was first added to maintain 85°C to 90°C, and then stirred and heated for 2 minutes. Second, 200 g (42 wt%) of white chocolate was added, and then stirred and heated at the same temperature for 5 to 10 minutes again. 100 g (21 wt%) of sugar was weighed and added thirdly, and heated and stirred uniformly so that the temperature of 85°C to 90°C was maintained. While the sugar was added, 60 g (13 wt%) of condensed milk was immediately added and uniformly stirred and heated again for 2 minutes to maintain a caramel reaction. Then, to induce emulsification, 50 g (10 wt%) of butter was added, heated for 5 to 10 minutes while stirring slowly and uniformly, and finally, a caramel containing 3 wt% of a black garlic extract was prepared so that the oil phase/water phase was not separated (FIG. 1A). 470 g of the black garlic extract caramel prepared according to the method was put into a sterilized bottle and placed in a refrigerator, and then, three caramels K, N, and H for the coffee additive raw material of the present invention were prepared.

### [Example 3]

### Preparation of liquid coffee additive (FIGS. 1B to 2)

According to Example 2, a coffee additive of the present invention was prepared by using black garlic extract caramels prepared using a black garlic extract prepared or purchased to be prepared as raw materials K, N, and H, respectively.

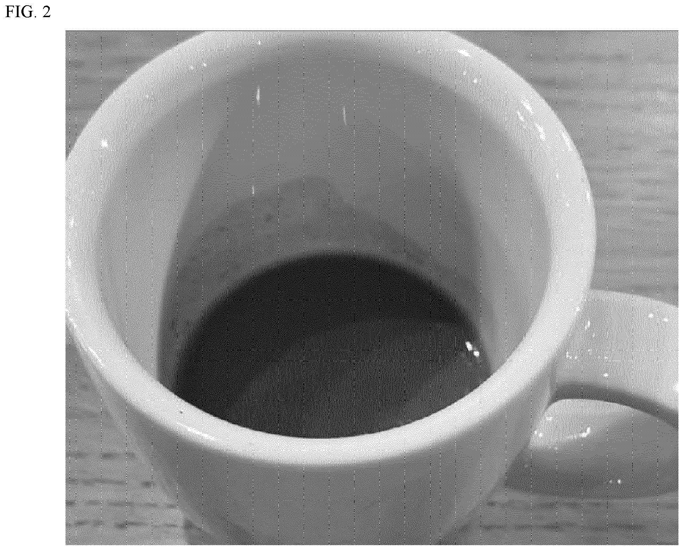

First, in a coating pan, 500 g of milk corresponding to 77 wt% of the total composition of the coffee additive of the present invention was weighed and heated for 2 minutes while uniformly stirring at 75°C to 80°C and then 150 g corresponding to 23 wt% of the total composition of the coffee additive of the present invention was secondly added and heated to 85°C to 90°C for 5 to 10 minutes (in the case of a caramel H prepared using a reddish brown black garlic extract of the present inventor as a raw material, the viscosity (cp) and the content of reducing sugar were high (compared to other companies of K company and N company), and thus the heating time was 5 minutes, and in the case of using caramels K and H prepared with the black garlic extracts from other companies, the heating time was 10 minutes) to prepare the coffee additive (FIG. 1B). Each of the coffee additives prepared as described above showed a shape like the photograph of FIG. 2.

### [Example 4]

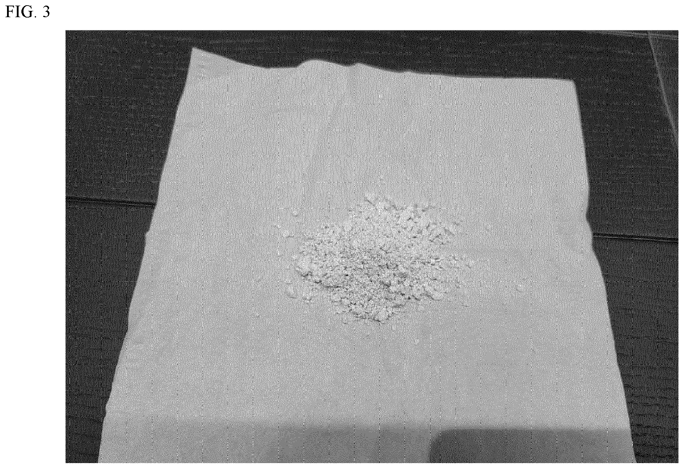

### Powdered coffee additive (FIG. 3)

The liquid coffee additive composition prepared according to Example 3 was formulated as a powder type product suitable for storage and distribution. It was most preferred that the powdered coffee additive was prepared by performing spray-drying at inlet Temp. 190 ± 30°C and out Temp. 100 ± 10°C using a general spray dryer. The powdered coffee additive of the present invention was mixed with purified water and used during using.

### [Experimental Example]

### Sensory test of coffee additive of the present invention

For the three types of coffee additives prepared according to Examples above, 10 sensory test persons were randomly sampled as a panel (5 men and 5 women) and drunken by adding a certain amount to each of cafe-commercial espresso and Americano. The results were evaluated by a 5-point scaling method (1 point: worst, 2 points: bad, 3 points: normal, 4 points: good, and 5 points: very good) and the experimental results of calculating the summed average value were shown in Table 1 below.

**[Table 1]**

| Sensory test result of coffee additive | | | | | | |
|---|---|---|---|---|---|---|
| Classification | Espresso | | | Americano | | |
| | K | N | H | K | N | H |
| Appearance | 3.9 | 3.8 | 4.1 | 3.1 | 3.2 | 4.1 |
| Color | 3.7 | 3.9 | 4.2 | 3.4 | 3.5 | 3.9 |
| Flavor | 3.3 | 3.4 | 4.2 | 3.1 | 3.3 | 2.6 |
| Taste | 4.1 | 4.1 | 4.3 | 2.0 | 2.0 | 2.3 |
| Physical properties | 3.7 | 3.8 | 4.1 | 2.0 | 2.0 | 2.5 |
| Total preference | 3.5 | 3.6 | 4.2 | 2.5 | 2.6 | 3.4 |

| | | | | | | |
|---|---|---|---|---|---|---|
| [Note] K: Coffee additive derived from black garlic extract from K company in Korea N: Coffee additive derived from black garlic extract from N company in Korea H: Coffee additive derived from black garlic extract of prior invention of present inventor | | | | | | |

As a result of the experiment, it was confirmed that the coffee additive according to the present invention may be used universally in Espresso and Americano. In particular, Espresso customers who are reluctant to drink due to the excessive bitter taste showed excellent effects. It has been determined that the coffee additive of the present invention may increase coffee sales if it is recognized that health functional substances such as SAC are consumed with coffee in addition to sweet taste. Particularly, it has been confirmed that it is remarkable that a novel liquid or powdered coffee additive containing a garlic extract, which has not existed so far, is provided to contribute to relieve caffeine addiction.

## Claims

1. A preparation method of a coffee additive comprising preparing a black garlic extract caramel using a black garlic extract and adding milk and then stirring and heating the mixture at 85°C to 90°C for 5 to 10 minutes.

2. The method of claim 1, further comprising: spray-drying the mixture after heating.

3. A liquid or powdered coffee additive with enhanced sweet taste and flavor prepared by the method of claim 1 or 2.

4. A black garlic extract caramel composition comprising 10 wt% of fresh cream, 42 wt% of white chocolate, 21 wt% of sugar, 13 wt% of condensed milk, 10 wt% of butter, 3 wt% of black garlic extract, and 1 wt% of water with respect to a total coffee additive composition.

## Patentansprüche

1. Ein Herstellungsverfahren für einen Kaffeezusatz, das Folgendes umfasst: das Herstellen einer Zuckercouleur aus schwarzem Knoblauchextrakt unter Verwendung eines schwarzen Knoblauchextrakts, das Hinzufügen von Milch und das anschließende Rühren und Erhitzen der Mischung bei 85°C bis 90°C über 5 bis 10 Minuten.

2. Das Verfahren gemäß Anspruch 1, das weiter das Sprühtrocknen der Mischung nach der Erhitzung umfasst.

3. Ein flüssiger oder pulverförmiger Kaffeezusatz mit verbessertem süßem Geschmack, hergestellt nach dem Verfahren gemäß Anspruch 1 oder 2.

4. Eine Zuckercouleur-Zusammensetzung aus schwarzem Knoblauchextrakt, die Folgendes umfasst: 10 Gewichtsprozent frische Sahne, 42 Gewichtsprozent weiße Schokolade, 21 Gewichtsprozent Zucker, 13 Gewichtsprozent Kondensmilch, 10 Gewichtsprozent Butter, 3 Gewichtsprozent schwarzen Knoblauchextrakt und 1 Gewichtsprozent Wasser, bezogen auf eine gesamte Kaffeezusatz-Zusammensetzung.

## Revendications

1. Procédé de préparation d'un additif de café comprenant la préparation d'un caramel d'extrait d'ail noir en utilisant un extrait d'ail noir et en ajoutant du lait puis en agitant et en chauffant le mélange à 85 °C à 90 °C durant 5 à 10 minutes.

2. Procédé selon la revendication 1, comprenant en outre le séchage par pulvérisation du mélange après chauffage.

3. Additif de café liquide ou en poudre avec un goût et une saveur sucrés améliorés préparé par le procédé selon la revendication 1 ou 2.

4. Composition de caramel d'extrait d'ail noir comprenant 10 % en poids de crème fraîche, 42 % en poids de chocolat blanc, 21 % en poids de sucre, 13 % en poids de lait condensé, 10 % en poids de beurre, 3 % en poids d'extrait d'ail noir et 1 % en poids d'eau par rapport à une composition d'additif de café totale.
